# EUROPEAN PATENT SPECIFICATION

(11) **EP 0 766 629 B1**
(45) Date of publication and mention of the grant of the patent: **23.12.1998**
(21) Application number: 95923448.5
(22) Date of filing: 30.06.1995
(51) Int. Cl.: B60R 25/00

(54) **ANTI-THEFT DEVICE**
ANORDNUNG FÜR DIEBSTAHLSICHERUNG
DISPOSITIF ANTIVOL

(30) Priority: 01.07.1994 GB 9413213; 01.06.1995 GB 9511115
(43) Date of publication of application: 09.04.1997
(73) Proprietor: Autolok Security Products Limited, Erdington, Birmingham B24 0QG (GB)
(72) Inventor: SOMERFIELD, Alan, London W4 4PH (GB); BREARLEY, David, Chadderton Oldham OL9 9DX (GB)
(74) Representative: Wilson, Nicholas Martin
(86) International application number: GB9501527
(87) International publication number: WO9601197

(56) References cited:
- EP-A- 0 383 720
- GB-A- 2 171 968
- US-A- 4 708 005
- US-A- 4 835 999
- US-A- 5 038 667

## Description

This invention relates to an anti-theft device, and in particular, to a device which mechanically immobilises a vehicle, or other machine, to which it is fitted by fixedly securing, in relation to one another, two of the control levers of the vehicle (or machine), for example, the handbrake lever and the gear lever.

There are a large number of mechanical devices presently in the market place which have been used for a number of years, and which provide a means by which a car can be effectively immobilised by use of mechanical means. Unfortunately, as will be well appreciated by those in the industry, no particular two makes of car are absolutely identical to one another and consequently in order to fulfil public demand for such devices at a marketable cost the devices have to be made fairly universal in their fitting characteristics. This in itself can lead to certain difficulties with regard to the effectiveness of such device.

One of the devices currently available in the market place is illustrated in UK published application number 2142889. The device shown here is an example of a mechanically operating car security device which fixedly secures two control levers of the vehicle in relation to one another. In this particular example of a device two pivotally connected members are provided one of which members is located over the handbrake lever and the other of which members is used to lock/clamp about the gear lever. The device is then secured in position and the vehicle effectively immobilised. One of the members comprises a hollow cylinder, closed by an end wall and having a pair of opposing angled guides extending between the end wall and the main wall of the cylinder to form a recess. The intention being to hold the handbrake lever firmly. However in use there is usually movement of the handbrake lever within the cylinder, especially if the handbrake lever is shorter than average or the distance between the handbrake lever and the gear lever is greater than average, thus creating a loose fit which can enable its removal by an expert thief.

Likewise, modern safety requirements dictate that gear levers have a greater degree of flexibility so as to minimise damage to persons in crash situations, this flexibility creates sufficient movement for the device to be removed by unauthorised persons, especially if the device has not been accurately fitted.

The pivotal connection in 2142889A is provided by a simple hinge restricting relative movement of the members about a fixed axis, thus making the device less universal and often difficult to fit.

The other member of the device disclosed in 2142889A, that adapted to engage the gear stick is formed in two parts, one end of the one part connected to the other member and the other end probably connected to the second part, said member adapted to engage the gear stick adjacent to its pivot, and the free end of the second part lockably attachable to the end of the first part remote from the hinge. The first part being telescopic to allow for adjustment. Again, despite being able to fit a variety of arrangements the device is comparably loose fitting and open to illicit removal.

GB 2 171 968 A discloses an anti-theft device for the locking together of two control levers of a vehicle. The portion of the device intended to cover the handbrake lever has an adjustable plastic bush intended to abut the top of the handbrake lever. Precise location of the bush within the device is required to ensure the handbrake lever is securely engaged by the bush. In use, the bush may move from its desired location and hence reduce the effectiveness of the device.

EP 0 383 720 A2 describes a device including a sleeve which fits over a vehicle handbrake lever. The sleeve does not include means with which to engage the handbrake lever and consequently the sleeve will only loosely fit and be easier to remove by a thief.

The device disclosed on US 5 038 667 includes resiliently deformable inserts which abut the gear and handbrake levers.

Inserts of this type are prone, with use, to wear, deteriorate and/or become damaged and thus tend not fit closely to the levers. Consequently the effectiveness of the device in locking the gear and handbrake levers is reduced.

According to the present invention there is provided a device for locking together two control levers of a vehicle, or other machine, so as to render the vehicle, or other machine, inoperable comprises a first portion, having means to lockably engage a first control lever of the vehicle, said first portion being pivotally connected to a second portion adapted to house a second control lever of the vehicle, characterised in that movement of the first portion relative to the second portion causes, or results in, the movement of detent means laterally(against the second control lever housed within the second portion.

It can be seen that once the device has been fitted on both control levers, and lockably engaged thereto, relative movement between the portions is prevented and thus subsequent disengagement of the detent means from against the second control lever is also prevented.

The detent means may be provided on, or integrally with a pivotal member, such as a lever, operated by means of at least one cam provided on the first portion of the device. Alternatively the cam may be provided on or integrally with the pivotal connection between the first and second portions.

The second portion is preferably of tubular construction open at its end remote from the pivotal connection.

The second portion may be tapered towards its open end to allow limited side movement about the second control lever at a point remote from the enclosed end of said control lever.

The detent means may be formed with a channel section adapted to partially surround the second control lever, thereby increasing its surface contact with said control lever thus increasing its grip thereon. The detent means may be provided with at least one resilient layer or pad to improve its grip on the second control lever and to protect the surface finish thereof.

The pivotal member may be provided with a projection or cam follower at its end remote from the detent means which projection cooperates with the cam.

The pivotal connection between the first and second portions may allow movement of each portion relative to the other in a combination of two or more planes.

The pivotal connection may be provided by a pair of pivots or hinges whose axes are substantially at right angles to each other thus allowing movement both side to side and up and down of each portion relative to the other.

Alternatively the axes may be set at any convenient angle with respect to each other.

The pivotal connection, may alternatively, be provided by a ball-and-socket joint, or a flexible cable or other flexible connecting portion, or any combination of the aforesaid.

Movement of the first and second portions of the device may be restricted in any direction before use, such restriction may be adjustable and is preferably set by the user to correspond to the users particular vehicle. Once in use, for example, and once the first portion is locked onto the control lever, the pivotal connection may be further restricted from any movement whatsoever.

The fist portion may be provided with a pair of telescopically arranged sleeves, clamp means being provided on each sleeve member thereby defining an opening in the first portion to receive the first control lever, so that telescopic closure of the sleeves closes said opening thus confining the first control lever between the clamp means.

Preferably one sleeve member is pivotally attached to the second portion and its respective clamp means is provided by a recess defining a first hook-like member, said recess being provided adjacent the end of the sleeve remote from the second portion, the clamp means of the other sleeve member being provided with a corresponding recess defining a hook-like member, whereby when the sleeve members are opened telescopically the first recess is open to receive the first control lever and when the sleeve members are closed telescopically the second hook-like member closes the recess, thus further closure of the sleeves results in the first control lever being trapped between the respective recesses of the sleeve members. Means is provided to lockably secure the sleeves closed.

Means are preferably provided to enable the length of the first portion, and therefore the device, to be adjusted, said means may be provided by a further sleeve telescopically mounted on the sleeve carrying the first hook-like member, and pivotally connected to the second portion.

The first portion is preferably provided with a number of different locking positions thereby accommodating varying sizes of control lever as well as distances bewteen control levers. Each locking position may be defined by respective teeth on a ratchet mechanism.
The exposed edges of each recess may be provided with resilient pads to assist grip on the control lever and prevent damage thereto when tightly locked on.

A device may be provided having any combination of any two of the three aspects of the present invention but preferably all three aspects may be combined to provide a very effective device.

According to a fourth aspect of the invention (of independent significance) a device for locking together two control levers of a vehicle, or other machine, so as to render the vehicle, or other machine, inoperable comprises a first portion, having means to lockably engage a first control lever, a second portion adapted to house a second control lever of the vehicle, characterised in that the portions are connected by means of at least two pivots, one of said pivots allowing the portions to axially rotate with respect to each other.

The axial rotation may be partial but is preferably through 360°.

An embodiment of the invention, incorporating each aspect of the invention will now be described by way of example with reference to the accompanying drawings, in which:-
Figure 1 is a plan of the device in accordance with each aspect of the invention;
Figure 2 is a sectional side elevation on the line II-II of Figure 1;
Figure 3 corresponds to Figure 2 but shows the detent means in its released position;
Figures 4 to 7 show the device of Figure 1 being fitted to the control levers of a vehicle; and
Figure 8 corresponds to Figure 2 but shows the detent means in engagement with a control lever.
Figure 9 corresponds to Figure 2, but shows a device in accordance with the fourth aspect of the invention.

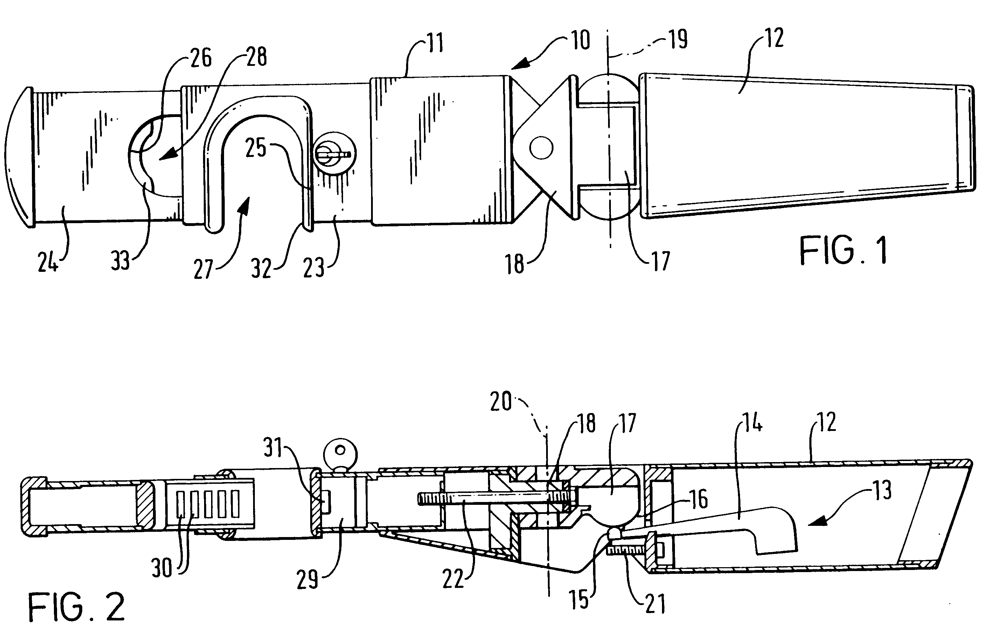

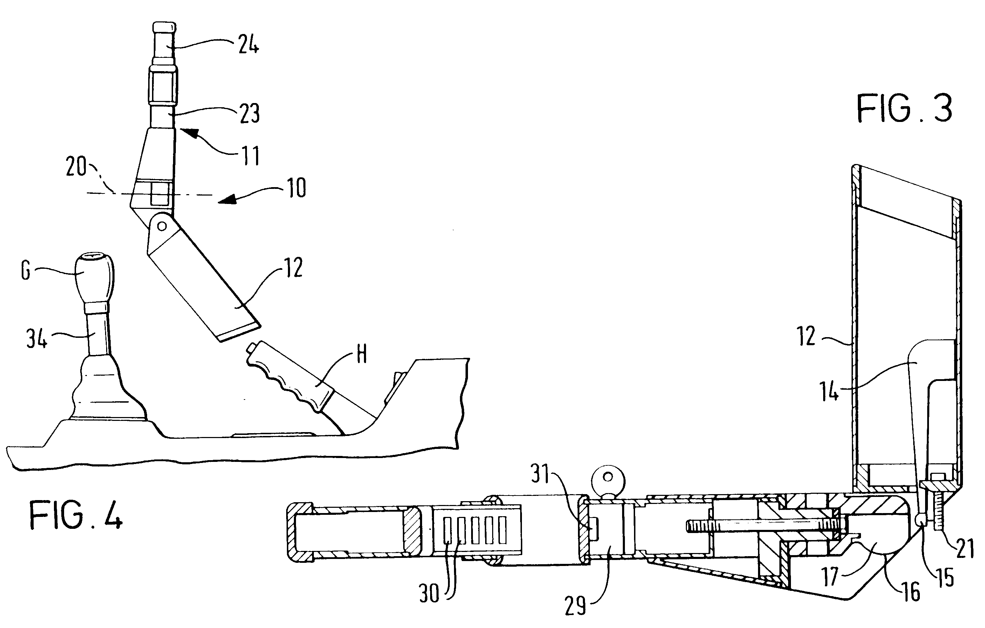

Referring to Figures 1 to 3 a device 10 for locking together two control levers of a vehicle (not shown) comprises a first portion 11 pivotally connected to a second portion 12 having detent means 13 for engagement with a control lever (not shown). The detent means 13 comprises a lever 14 formed with a channel section towards one end and a cam follower 15 adjacent the other end. A cam 16 is provided on a first hinge 17 of the pivotal connection so that relative movement between portions 11 and 12 causes actuation of the lever 14 as can be seen in Figures 2 and 3.

The first hinge 17, in this embodiment is connected to a second hinge 18 and the respective axes 19 and 20 are at right angles to each other so that the portions 11 and 12 move in more than one plane relative to each other, i.e. up and down, as provided by the first hinge 17, and side to side, as provided by second hinge 18. Movement of each hinge 17 and 18 is adjustably restricted by means of respective screws 21 and 22.

The first portion 11 is provided with a pair of telescopically arranged sleeves 23 and 24 each being provided with clamp means 25 and 26. The clamp means 25 is provided by a recess 27, and the clamp means 26 likewise is provided with a recess 28, whereby, as shown in Figures 1 to 3 when the sleeves 23 and 24 are opened the first recess is open to receive a control lever (not shown). Closure of the sleeves, as will be seen in later Figures results in closure of the recess.

A key operated locking mechanism 29 is provided together with a number of ratchet positions 30 for engagement with lock pawl 31.

Resilient pads 32 and 33 are provided on the exposed edges of respective recesses 27 and 28.

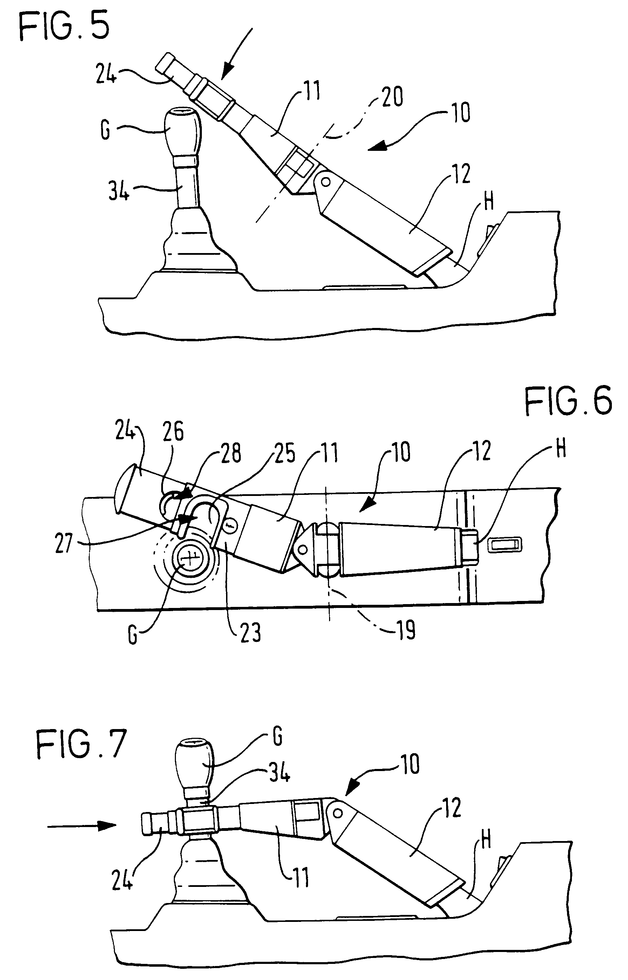

Referring now to Figures 4 to 8 the various steps for fitting the device 10 are shown.

Adjustment of screws 21 and 22 will be previously conducted before regular fitting of the device and means may be provided to permanently secure the screws at a determined position.

With the longitudinal axes of the portions 11 and turned towards 90° with respect to each other, (as shown in Figure 3) the second portion 12 is slipped over the control lever in this example, handbrake lever H, rotation of the first portion 11 about axis 19 causes the cam 16 to act on the cam follower 15 so as to cause the lever 14 to engage the lever H, further rotation ensuring that the lever H is securely held within portion 12. First portion 11 is rotated slightly about axis 20 with its recess 27 open to receive the stock 34 of Gear lever G, reverse rotation of the portion 11 causes recess 27 to enclose stock 34, and the sleeve 24 can be telescoped into sleeve 23 causing closure of recess 27 and clamping of stock 34 between clamps 25 and 26, pawl 31 of lock 29 engages appropriate ratchet position 30.

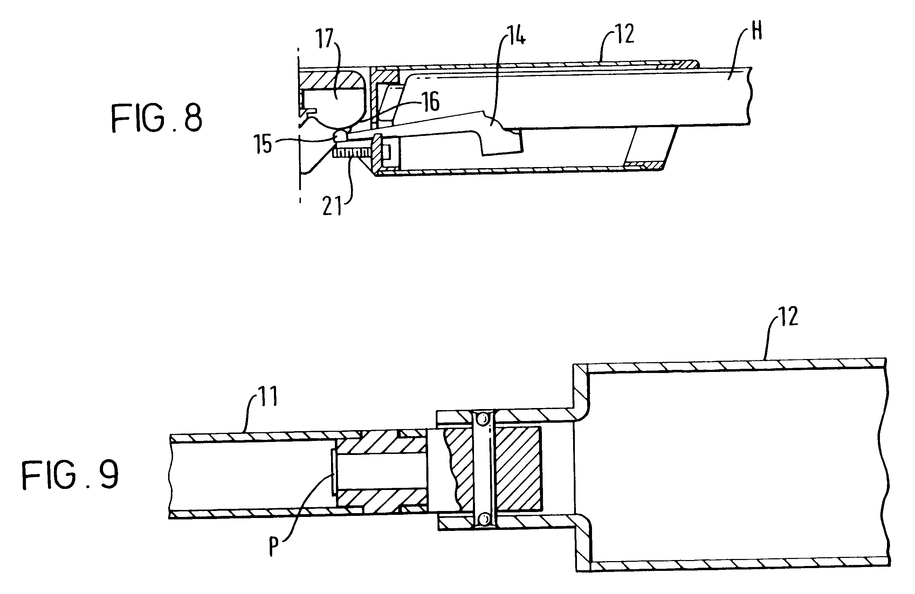

Referring to Figure 9 the main reference numerals remain the same but a second pivotal connection P is provided allowing, in this embodiment, complete axial rotation of portions 11 and 12 with respect to each other.

## Claims

1. A device for locking together two control levers of a vehicle, or other machine, so as to render the vehicle, or other machine, inoperable comprising a first portion (11), having means to lockably engage a first control lever (G) of the vehicle, said first portion (11) being pivotally connected to a second portion (12) adapted to house a second control lever (H) of the vehicle, characterised in that movement of the first portion (11) relative to the second portion (12) causes, or results in, the movement of detent means (13) laterally against the second control lever (H) housed within the second portion (12).

2. A device as in Claim 1 wherein the detent means (13) includes a pivotal member operated by means of a cam (16) provided on the first portion (11) of the device.

3. A device as in Claim 2 wherein the pivotal member is a lever (14).

4. A device as in Claim 2 or Claim 3 wherein the pivotal member is provided with a projectional cam follower (15) at its end remote from the detent means (13) which projection co-operates with the cam (16).

5. A device as in any one of Claims 2 to 4 wherein the cam (16) is provided on or integrally with the pivotal connection between the first and second portions (11,12).

6. A device as in any preceding claim wherein the second portion (12) is of tubular construction open at its end remote from the pivotal connection.

7. A device as in any preceding claim wherein the second portion (12) is tapered towards its open end to allow limited side movement about the second control lever (H) at a point remote from the enclosed end of the said control lever (H).

8. A device as in any one of Claims 2 to 7 wherein the detent means (13) is formed with a channel section adapted to partially surround the second control lever (H).

9. A device as in Claim 8 wherein the detent means (13) is provided with at least one resilient layer or pad.

10. A device as claimed in claims 1 to 8 wherein the pivotal connection between the first and second portions (11,12) allows movement of each portion relative to the other in a combination of 2 or more planes.

11. A device as in Claim 10 wherein the pivotal connection is provided by a pair of hinges (17,18) whose axes (19,20) are substantially at right angles to each other thus allowing movement side to side and up and down of each portion (11,12) relative to the other.

12. A device as in Claim 11 wherein the axes (19,20) are set at any convenient angle with respect to each other.

13. A device as in Claim 10 wherein the pivotal connection is provided by a ball and socket joint.

14. A device as claimed in Claim 10 wherein the pivotal connection is provided by a flexible cable or any other flexible connection portion.

15. A device in any one of Claims 10 to 14 wherein movement of the first and second portions (11,12) of the device is restricted in any direction before use.

16. A device as in Claim 15 wherein the restriction of movement is adjustable and may be preset by the user to correspond to the users particular vehicle.

17. A device as claimed in any one of Claims 1 o 16 wherein the first portion is provided with a pair of telescopically arranged sleeves, (23,24) clamp means (23,26) being provided on each sleeve (23,24), an opening being defined in the first portion (11) to receive the first control lever (G), so that telescopic closure of the sleeve 24 into sleeve 23, closes said opening thus confining the first control lever between the clamp means (25,26).

18. A device as in Claim 16 wherein one sleeve (23) is pivotally attached to the second portion (12) and its respective clamp means (25) is provided by a recess (27) defining a first hook-like member, said recess (27) being provided adjacent the end of the sleeve (23) remote from the second portion (12), the clamp means (26) of the other sleeve (24) being provided with a corresponding recess (28) defining a hook-like member, whereby when the sleeves (23,24) are open telescopically the first recess (27) is open to receive the first control lever (G) and when the sleeves (23,24) are closed telescopically the second hook-like member closes the recess (27), thus further closure of the sleeves (23,24) results in the first control lever (G) being trapped between the respective recesses (27,28) of the sleeves (23,24).

19. A device as in either of Claims 17 or 18 wherein means (29) is provided to lockably secure the sleeves (23,24) closed.

20. A device as in any one of Claims 17 to 19 wherein means is provided to enable the length of the first portion (11), and therefore the device, to be adjusted.

21. A device as in Claim 20 wherein said adjustment means is provided by a further sleeve telescopically mounted on the sleeve (23) carrying the first hook-like member, and pivotally connected to the second portion (12).

22. A device as in any one of claims 16 to 20 wherein the first portion (11) is provided with a number of different locking positions.

23. A device as claimed in Claim 18 wherein the exposed edges of each recess (27,28) are provided with resilient pads.

24. A device as claimed in any preceding claim wherein the first and second portions (11,12) are connected by means of at least two pivots, one of said pivots allowing the portions to axially rotate with respect to each other.

25. A device as claimed in Claim 24 wherein the axial rotation is through or substantially through 260°.

## Patentansprüche

1. Eine Vorrichtung zum gegenseitigen Sperren oder Verriegeln zweier Bedienungshebel eines Fahrzeuges oder einer anderen Maschine gegeneinander, so dass das Fahrzeug oder die Maschine unbedienbar wird, umfassend einen ersten Teil (11) mit Mitteln zum sperrenden Angriff oder Eingriff an einem ersten Bedienungshebel (G) des Fahrzeuges, wobei der erste Teil (11) schwenkbar verbunden ist mit einem zweiten Teil (12), der ausgebildet ist zur Aufnahme eines zweiten Bedienungshebels (H) des Fahrzeuges, dadurch gekennzeichnet, dass eine Bewegung des ersten Teils (11) relativ gegenüber dem zweiten Teil (12) eine seitliche Bewegung von Sperrmitteln (13) gegen den zweiten Bedienungshebel (H), der innerhalb des zweiten Teils (12) aufgenommen ist, bewirkt oder in eine solche Bewegung resultiert.

2. Eine Vorrichtung nach Anspruch 1, wobei die Sperrmittel (13) ein schwenkbares Glied umfassen, welches mittels einer steuerkurve (16) betätigt wird, die an dem ersten Teil (11) der Vorrichtung vorgesehen ist.

3. Eine Vorrichtung nach Anspruch 2, wobei das schwenkbare Glied ein Hebel (14) ist.

4. Eine Vorrichtung nach Anspruch 2 oder 3, wobei das schwenkbare Glied versehen ist mit einem vorstehenden Abtastnocken (15) an seinem, von den Sperrmitteln (13) entfernt liegenden Ende, wobei der Abtastnocken mit der Steuerkurve (16) zusammenarbeitet, also diese abtastet.

5. Eine Vorrichtung nach einem der Ansprüche 2 bis 4, wobei die Steuerkurve (16) vorgesehen ist an oder einstückig ausgebildet ist mit der schwenkbaren Verbindung zwischen dem ersten Teil (11) und zweiten Teil (12).

6. Eine Vorrichtung nach irgendeinem der vorausgehenden Ansprüche, wobei der zweite Teil (12) von rohrförmiger Gestalt und offen an dem der Schwenkverbindung gegenüberliegenden Ende ist.

7. Eine Vorrichtung nach irgendeinem der vorausgehenden Ansprüche, wobei der zweite Teil (12) sich zu seinem offenen Ende hin verjüngt bzw. enger wird, um eine begrenzte seitliche Bewegung über dem zweiten Bedienungshebel (H) um einen, von dem umschlossenen Ende des Bedienungshebels (H) entfernten Punkt herum zu gestatten.

8. Eine Vorrichtung nach einem der Ansprüche 2 bis 7, wobei das Sperrmittel (13) mit einem Kanalbereich (Fig. 8) geformt ist, zum teilweisen Umfassen des zweiten Bedienungshebels (H).

9. Eine Vorrichtung nach Anspruch 8, wobei das Sperrmittel (13) mit wenigstens einer federnden Beschichtung oder einem Polster versehen ist.

10. Eine Vorrichtung nach einem der Ansprüche 1 bis 8, wobei die schwenkbare Verbindung zwischen dem ersten und dem zweiten Teil (11, 12) Bewegungen jedes der beiden Teile relativ zu dem jeweils anderen Teil in Kombination von zwei oder mehr Ebenen erlaubt.

11. Eine Vorrichtung nach Anspruch 10, wobei die Schwenkverbindung vorgesehen ist durch ein Paar von Gelenken (17, 18), deren Achsen (19, 20) im Wesentlichen rechtwinkelig zueinander sind, womit jedes der beiden Teile (11, 12) von einer Seite zur anderen Seite und von oben nach unten relativ zu dem anderen Teil beweglich ist.

12. Eine Vorrichtung nach Anspruch 11, wobei die Achsen (19, 20) gegeneinander unter einem jeweils passenden Winkel gegeneinander angeordnet sind.

13. Eine Vorrichtung nach Anspruch 10, wobei die Schwenkverbindung von einer Gelenkkugel und einer Gelenkschale gebildet sind.

14. Eine Vorrichtung nach Anspruch 10, wobei das schwenkgelenk von einem flexiblen Kabel oder einem anderen flexiblen Verbindungteil gebildet ist.

15. Eine Vorrichtung nach einem der Ansprüche 10 bis 14, wobei die Bewegung des ersten und des zweiten Teils (11, 12) vor der Verwendung in jeglicher Richtung beschränkt ist.

16. Eine Vorrichtung nach Anspruch 15, wobei die Begrenzung der Bewegung einstellbar und voreinstellbar ist durch den Anwender entsprechend dem jeweiligen Fahrzeug des Anwenders.

17. Eine Vorrichtung nach irgendeinem der Ansprüche 1 bis 16, wobei der erste Teil gebildet ist von einem Paar von teleskopisch gegeneinander verschieblichen Hülsen (23, 24), wobei KlemmMittel (25, 26) an jeder der Hülsen (23, 24) vorgesehen sind, eine Öffnung ist gebildet an dem ersten Teil (11) zur Aufnahme des ersten Bedienungshebels (G), wobei eine teleskopische Verschlussbewegung der Hülse (24) in die Hülse (23) hinein diese Öffnung verschliesst, womit der erste Bedienungshebel zwischen den Klemm-Mitteln (25, 26) eingeschlossen ist.

18. Eine Vorrichtung nach Anspruch 16, wobei die eine Hülse (23) schwenkbar verbunden ist mit dem zweiten Teil (12) und ihre Klemm-Mittel (25) von einer Ausnehmung (27) gebildet ist, die ein erstes hakenartiges Glied bildet, die Ausnehmung (27) ist vorgesehen an dem von dem zweiten Teil (12) entfernt liegenden Ende der Hülse (23), die Klemm-Mittel (26) der anderen Hülse (24) sind versehen mit einer korrespondierenden Ausnehmung (28), die ein zweites hakenförmiges Glied definiert, wobei wenn die beiden Hülsen (23, 24) teleskopisch auseinandergezogen sind, die erste Ausnehmung (27) offen ist zur Aufnahme des ersten Bedienungshebels (G), und wenn die Hülsen (23, 24) teleskopisch ineinander eingeschoben sind, das zweite hakenförmige Glied die Ausnehmung (27) verschliesst, so dass weiterer Verschluss der Hülsen (23, 24) resultiert darin, dass der erste Bedienungshebel (G) gefangen oder eingeschlossen ist zwischen den beiden Ausnehmungen (27, 28) der Hülsen (23, 24).

19. Eine Vorrichtung nach Anspruch 17 oder 18, wobei Mittel (29) vorgesehen sind, welche die geschlossenen oder ineinander eingeschobenen Hülsen (23, 24) in der geschlossenen Stellung sperren.

20. Eine Vorrichtung nach irgendeinem der Ansprüche 17 bis 19, dadurch gekennzeichnet, dass Mittel vorgesehen sind, die es gestatten, dass die Länge des ersten Teils (11), und damit der Vorrichtung, einstellbar ist.

21. Eine Vorrichtung nach Anspruch 20, dadurch gekennzeichnet, dass die Längeneinstellmittel vorgesehen sind durch eine weitere Hülse, die teleskopisch angebracht ist auf der mit dem ersten hakenförmigen Glied versehenen Hülse (23), und welches weitere Rohr schwenkbar verbunden ist mit dem zweiten Teil (12).

22. Eine Vorrichtung nach einem der Ansprüche 16 bis 20, wobei der erste Teil (11) versehen ist mit einer Reihe verschiedener Sperrpositionen.

23. Eine Vorrichtung nach Anspruch 18, wobei die angreifenden Kanten der Ausnehmungen (27, 28) mit federnden Polstern versehen sind.

24. Eine Vorrichtung nach irgendeinem der vorausgehenden Ansprüche, wobei der erste Teil und der zweite Teil (11, 12) miteinander verbunden sind mittels wenigstens zweier Gelenkzapfen, wobei einer der Zapfen es den Teilen erlaubt, gegeneinander axial zu rotieren bzw. zu verschwenken.

25. Eine Vorrichtung nach Anspruch 24, wobei der Schwenkwinkel im Wesentlichen bis zu 260° beträgt.

## Revendications

1. Dispositif pour interverrouiller deux leviers de commande d'un véhicule ou autre machine, de manière à rendre impossible le fonctionnement du véhicule ou de la machine, comprenant une première partie (11) comportant un moyen pour engager à verrouillement un premier levier de commande (G) du véhicule, la première partie (11) étant reliée pivotante à une deuxième partie (12) conçue pour loger un deuxième levier de contrôle (H) du véhicule, caractérisé en ce que le mouvement de la première partie (11) par rapport à la deuxième partie (12) provoque le ou se traduit par le mouvement d'un moyen de butée (13) latéralement contre le deuxième levier de commande (H) logé dans la deuxième partie (12).

2. Dispositif selon la revendication 1, dans lequel le moyen de butée (13) comporte un élément pivotant actionné par une came (16) prévue sur la première partie (11) du dispositif.

3. Dispositif selon la revendication 2, dans lequel l'élément pivotant est un levier (14).

4. Dispositif selon l'une quelconque des revendications 2 ou 3, dans lequel l'élément pivotant comporte à son extrémité éloignée du moyen de butée (13) une contre-came en saillie dont la saillie coopère avec la came (16).

5. Dispositif selon l'une quelconque des revendications 2 à 4, dans lequel la came (16) est montée sur ou formée d'une seule pièce avec la connexion pivotante entre la première et la deuxième parties (11,12).

6. Dispositif selon l'une quelconque des revendications précédentes, dans lequel la deuxième partie (12) est de conformation tubulaire ouverte à son extrémité éloignée de la connexion pivotante.

7. Dispositif selon l'une quelconque des revendications précédentes, dans lequel la deuxième partie (12) est rétrécie vers son extrémité ouverte pour permettre un mouvement latéral limité autour du deuxième levier de commande (H) en un point éloigné de l'extrémité enfermée du levier de commande (H).

8. Dispositif selon l'une quelconque des revendications 2 à 7, dans lequel le moyen de butée (13) est un profilé conformé en canal conçu pour entourer partiellement le second levier de commande (H).

9. Dispositif selon la revendication 8, dans lequel le moyen de butée (13) comporte au moins une couche ou un tapis élastiques.

10. Dispositif selon l'une quelconque des revendications 1 à 8, dans lequel la connexion pivotante entre la première et la deuxième partie (11,12) permet le mouvement de chaque partie par rapport à l'autre dans une combinaison d'au moins deux plans.

11. Dispositif selon la revendication 10, dans lequel la connexion pivotante consiste en un couple d'articulations ((17,18) dont les axes (19,20) sont sensiblement à angle droit l'un par rapport à l'autre permettant ainsi un mouvement côte à côte et montant et descendant de chaque partie (11,12) l'une par rapport à l'autre.

12. Dispositif selon la revendication 11, dans lequel les axes (19,20) sont disposés entre eux selon n'importe quel angle convenable.

13. Dispositif selon la revendication 10, dans lequel la connexion pivotante consiste en une rotule.

14. Dispositif selon la revendication 10, dans lequel la connexion pivotante consiste en un câble flexible ou toute autre partie flexible de connexion.

15. Dispositif selon l'une quelconque des revendications 10 à 14, dans lequel le mouvement de la première et de la deuxième parties (11,12) du dispositif est limité dans n'importe quelle direction avant usage.

16. Dispositif selon la revendication 15, dans lequel la limitation en mouvement est réglable et peut être préréglée par l'utilisateur pour correspondre au véhicule particulier de l'utilisateur.

17. Dispositif selon l'une quelconque des revendications 1 à 16, dans lequel la première partie comporte un couple de manchons (23,24) télescopiques, chaque manchon (23,24) présentant un moyen de serrage (25,26), une ouverture étant ménagée dans la première partie (11) pour recevoir le premier levier de commande (G), de sorte que l'emboîtement télescopique du manchon 24 dans le manchon 23 obture cette ouverture enfermant ainsi le premier levier de commande entre les moyens de serrage (25,26).

18. Dispositif selon la revendication 16, dans lequel le manchon (23) est relié pivotant à la deuxième partie (12) et son moyen de serrage (25) comporte un évidement (27) formant un premier élément en crochet, l'évidement (27) étant adjacent à l'extrémité du manchon (23) éloigné de la deuxième partie (12), le moyen de serrage (26) de l'autre manchon (24) comportant un évidement correspondant (28) formant un élément en crochet, et dans lequel lorsque les manchons (23,24) sont ouverts télescopiquement, le premier évidement (27) est ouvert pour loger le premier levier de commande (G) et lorsque les manchons (23,24) sont fermés télescopiquement, le second élément en crochet ferme l'évidement (27), et ainsi une fermeture supplémentaire des manchons (23,24) provoque ou se traduit par l'engagement à blocage du premier levier de commande (G) entre les évidements (27,28) de chacun des manchons (23,24).

19. Dispositif selon l'une quelconque des revendications 17 ou 18, comportant un moyen (29) pour assurer la fermeture des manchons (23,24) en verrouillement.

20. Dispositif selon l'une quelconque des revendications 17 à 19 comportant un moyen permettant de régler la longueur de la première partie (11), et par conséquent du dispositif.

21. Dispositif selon la revendication 20, dans lequel le moyen de réglage consiste en un manchon supplémentaire monté télescopique sur le manchon (23) présentant le premier élément en crochet et est relié pivotant à la deuxième partie (12).

22. Dispositif selon l'une quelconque des revendications 16 à 20, dans lequel la première partie (11) comporte un certain nombre de positions de verrouillage différentes.

23. Dispositif selon la revendication 18, dans lequel les bords apparents de chaque évidement (27,28) sont recouverts de tapis élastiques.

24. Dispositif selon l'une quelconque des revendications précédentes, dans lequel les première et deuxième parties (11) sont reliées au moyen d'au moins deux pivots, un de ces pivots permettant aux parties de pivoter axialement l'une par rapport à l'autre.

25. Dispositif selon la revendication 24, dans lequel le pivotement axial couvre 260° ou sensiblement 260°.
